# FASCICULE DE BREVET EUROPEEN

(11) **EP 2 532 050 B1**
(45) Date de publication et mention de la délivrance du brevet: **20.05.2020**
(21) Numéro de dépôt: 11700955.5
(22) Date de dépôt: 27.01.2011
(51) Int. Cl.: H01Q 21/24, H01Q 21/00, H04B 7/185

(54) **ANTENNE PLANE DIRECTIVE EMBARQUÉE, VÉHICULE COMPORTANT UNE TELLE ANTENNE ET SYSTÈME DE TÉLÉCOMMUNICATION PAR SATELLITE COMPORTANT UN TEL VÉHICULE**
BORDINTERNE DIREKTIONALE FLACHPLATTENANTENNE, FAHRZEUG MIT EINER SOLCHEN ANTENNE UND SATELLITENTELEKOMMUNIKATIONSSYSTEM MIT EINEM SOLCHEN FAHRZEUG
ON-BOARD DIRECTIONAL FLAT-PLATE ANTENNA, VEHICLE COMPRISING SUCH AN ANTENNA, AND SATELLITE TELECOMMUNICATION SYSTEM COMPRISING SUCH A VEHICLE

(30) Priorité: 05.02.2010 FR 1000474
(43) Date de publication de la demande: 12.12.2012
(73) Titulaire: THALES, 92400 Courbevoie (FR)
(72) Inventeur: LENORMAND, Régis, F-31700 Blagnac (FR); DENIS, Xavier, F-31770 Colomiers (FR); DECROIX, Jacques, F-31450 Odars (FR); CHUBERRE, Nicolas, F-31820 Pibrac (FR); RIGAL, Christian, F-31120 Portet-sur-Garonne (FR); GARNIER, Gilles, F-31830 Plaisance-du-Touch (FR); ALMEIDA, Jean-Luc, F-31410 Le Fauga (FR)
(74) Mandataire: Esselin, Sophie
(86) Numéro de dépôt international: PCT/EP2011/051105
(87) Numéro de publication internationale: WO 2011/095425

(56) Documents cités:
- FR-A2- 2 448 792
- US-A- 4 691 205
- US-A- 6 166 701
- US-A1- 2006 132 374
- US-B1- 6 351 244
- WANG J ET AL: "An embedded antenna for mobile DBS", 2004 IEEE 60TH VEHICULAR TECHNOLOGY CONFERENCE. VTC2004-FALL (IEEE CAT. NO.04CH37575) IEEE PISCATAWAY, NJ, USA,, vol. 6, 26 septembre 2004 (2004-09-26), pages 4092-4095, XP010790191, ISBN: 978-0-7803-8521-4

## Description

La présente invention concerne une antenne plane directive embarquée, un véhicule comportant une telle antenne et un système de télécommunication par satellite comportant un tel véhicule. Elle s'applique notamment au domaine des télécommunications par satellite et plus particulièrement aux équipements de télécommunication implantés sur des véhicules mobiles tels que des moyens de transport terrestres, maritimes ou aéronautiques pour assurer une connexion bi-directionnelle en bande Ka entre un terminal mobile et une station terrestre par l'intermédiaire d'un répéteur implanté sur un satellite. Selon un mode de réalisation particulier, elle s'applique également à la poursuite simultanée de deux satellites distincts fonctionnant respectivement en bande Ka et en bande L.

Dans les moyens de transport, tels que les trains, les bus, les avions, les besoins en connexions à un service Internet à large bande et les besoins en antennes à haute performance, bas coût et de faible dimension sont croissants. Actuellement, il est connu de réaliser un lien satellitaire entre un terminal mobile et une station terrestre pour, par exemple, assurer une connexion internet aux passagers d'un train ou d'un bus, en utilisant une antenne très peu directive fonctionnant en bande L. Le problème est qu'en bande L, il y a très peu de fréquences disponibles et que le débit de transmission des communications est donc très faible. Pour augmenter le débit, il est nécessaire d'établir des liens avec des satellites fonctionnant en bande Ku (10,5GHz à 14,5GHz) ou Ka (20 à 30 Ghz) et de réaliser des antennes directives. Cependant, avec une antenne directive, il est nécessaire de pointer en continu le satellite quelle que soit la position du véhicule. Par ailleurs, en bande Ku ou Ka, les transmissions par satellite peuvent être masquées par des obstacles dans la direction de pointage d'un satellite. Les obstacles peuvent être de la végétation ou des infrastructures telles que des immeubles ou des ponts. Il est donc nécessaire, pour augmenter la disponibilité du lien radiofréquence avec un satellite, de disposer d'une diversité spatiale autorisant la poursuite de deux satellites simultanément. Les deux satellites ayant des directions de pointage différentes, la poursuite simultanée de deux satellites nécessite une antenne bi-faisceaux à pointage indépendant, tel qu'une antenne à balayage électronique, ou de deux antennes à pointage mécanique.

Dans le cas d'une antenne à balayage électronique, pour couvrir un territoire tel que l'Europe, l'antenne doit être en mesure d'assurer, en émission et en réception, un pointage dans un domaine angulaire compris entre 0° et 360° en azimut et entre 20° et 60° en moyenne en élévation.

Ces antennes réseau ont l'avantage d'être planes et donc à faible encombrement dans le sens de leur hauteur, cependant le domaine angulaire à couvrir étant très important, pour obtenir de bonnes performances et éviter l'apparition de lobes de réseau dans le diagramme de rayonnement de l'antenne, il est nécessaire d'utiliser un réseau de formation de faisceaux comportant un très grand nombre de contrôles de phase, ce qui est prohibitif. Par exemple, pour une antenne en bande Ku ayant une surface de l'ordre de 1m2, le nombre d'éléments rayonnants de l'antenne doit être supérieur à 15000, ce qui est rédhibitoire en termes de coût et de complexité de l'antenne pour une application aux moyens de transport.

Dans le cas de l'utilisation d'une double antenne à pointage mécanique, chaque antenne élabore un faisceau en utilisant un système de pointage mécanique indépendant pour pointer les deux satellites simultanément. Dans ce type d'antenne, le pointage de chaque antenne en direction d'un satellite est réalisé par une combinaison de deux mouvements mécaniques. Un premier mouvement mécanique est obtenu par l'intermédiaire d'une plateforme tournante disposée dans un plan XY et assurant l'orientation de l'antenne en azimut. Un deuxième mouvement en élévation est réalisé par un dispositif annexe, par exemple un miroir plan, solidaire de la plateforme. Chaque antenne comporte classiquement un réflecteur parabolique et une source rayonnante illuminant le réflecteur. Pour diminuer l'encombrement du réflecteur et réduire la hauteur de l'antenne, sa périphérie est elliptique au lieu de circulaire. Typiquement, une telle antenne simple actuellement déployée sur des trains à grande vitesse présente une hauteur de l'ordre de 45cm. Bien que cette hauteur soit compatible des trains actuels, elle est trop importante pour les futurs trains à grande vitesse à deux ponts pour lesquels la hauteur disponible pour l'implantation d'une antenne, entre le toit du train et les caténaires, est beaucoup plus faible.

De même, pour une application dans le domaine aéronautique, la hauteur de l'antenne a une influence sur la trainée engendrée par l'avion ainsi que sur la consommation du carburant. Par exemple, les antennes à réflecteur actuelles implantées sur les avions ont une hauteur de l'ordre de 30cm et entraînent une surconsommation de carburant équivalente à huit passagers supplémentaires.

Il existe des architectures permettant de réduire la hauteur de l'antenne à pointage mécanique. Selon une première architecture, l'antenne est composée de deux plaques parallèles entre lesquelles circulent des composantes de courant longitudinales et d'un réseau à une dimension de rainures continues transversales qui couplent et rayonnent l'énergie dans l'espace. Les deux plaques et le réseau de rainures sont montés sur deux plateaux coplanaires tournant mécaniquement indépendamment l'un de l'autre, les deux mouvements de rotation étant superposés et réalisés dans le même plan des plateaux. L'orientation du plateau inférieur permet de régler la direction de pointage en azimut, l'orientation du plateau supérieur permet d'obtenir une inclinaison variable des rainures et de modifier ainsi la direction de pointage en élévation du faisceau engendré par l'antenne. Cependant, cette antenne fonctionnant initialement en polarisation linéaire, il est nécessaire d'ajouter une grille de polarisation orientable supplémentaire montée sur la face supérieure de l'antenne pour contrôler le plan de polarisation de l'antenne ce qui accroît la complexité de mise en œuvre et la hauteur de l'antenne qui n'est alors pas plane.

Selon une deuxième architecture d'antenne plane à hauteur réduite, l'antenne comporte plusieurs plans alternés de substrats et de plans métalliques superposés les uns au-dessus des autres. L'antenne comporte un premier plan métallique inférieur, puis un premier plan de substrat comportant plusieurs sources, le premier plan de substrat comportant une extrémité latérale formant une surface parabolique sur laquelle les ondes émises par les sources se réfléchissent. Au-dessus du premier plan de substrat se trouve un deuxième plan métallique comportant des fentes de couplage du plan d'onde réfléchi, chaque fente de couplage débouchant dans des guides d'onde à fentes respectifs disposés côte à côte parallèlement les uns aux autres dans un même deuxième plan de substrat. Les ondes guidées sont ensuite émises sous forme d'un faisceau rayonné au travers d'une pluralité d'ouvertures rayonnantes pratiquées dans un troisième plan métallique supérieur. Un balayage et un dépointage du faisceau en élévation, dans un plan perpendiculaire au plan de l'antenne, est obtenu par commutation des différentes sources mais aucune modification de pointage en azimut n'est possible. Par ailleurs, ce type d'antenne très compacte présente l'inconvénient de nécessiter des moyens de commutation à haute puissance, ce qui n'est jamais simple à réaliser. En outre, la commutation des sources est discrète ce qui ne permet pas d'obtenir un pointage continu du faisceau. Enfin, cette antenne très compacte est alimentée par une unique source de puissance ce qui nécessite d'utiliser des amplificateurs de puissance volumineux qui accroissent considérablement le volume de l'antenne qui devient trop important pour une application aux moyens de transport. US2006132374 divulgue un réseau d'antennes à fentes monté sur un véhicule.

Pour résoudre le problème de pointage discret de cette antenne plane, il a été proposé de n'utiliser qu'une seule source et de placer l'antenne plane sur une plateforme tournante permettant de régler le pointage en azimut, la plateforme comportant un miroir articulé sur la plateforme dont l'angle d'inclinaison par rapport au plan de la plateforme est variable par rotation. L'onde plane émise par la source illumine le miroir qui réfléchit cette onde suivant une direction de pointage choisie, l'angle d'inclinaison du miroir permettant de régler l'angle d'élévation du faisceau émis. Cette antenne est très elliptique, la dimension du miroir dans sa région articulée sur la plateforme étant très supérieure à la dimension du miroir dans sa région inclinée au-dessus de la plateforme, ce qui permet de réduire la hauteur de l'antenne à 20 ou 30cm, mais cette hauteur reste encore trop importante pour une application aux moyens de transport.

Un premier but de l'invention est de réaliser une antenne plane directive embarquée ne comportant pas les inconvénients des antennes existantes et pouvant être implantée sur un moyen de transport mobile. En particulier, le but de l'invention est de réaliser une antenne plane directive embarquée, fonctionnant en bande Ka, très compacte dans le sens de sa hauteur, simple à mettre en œuvre et à faible coût, capable de rester pointée sur un satellite en continu quelle que soit la position du moyen de transport et permettant un contrôle du plan de polarisation sans ajout d'une grille orientable.

Un deuxième but de l'invention est de réaliser une antenne plane hybride embarquée très compacte fonctionnant en bande Ka et en bande L, permettant la poursuite simultanée de deux satellites.

Pour cela, l'invention concerne une antenne plane directive embarquée telle que définie dans la revendication 1.

Préférentiellement, chaque chevron forme un angle égal à 90°.

Avantageusement, le réseau de guides à fentes rayonnantes est monté sur une plateforme tournante en azimut.

Préférentiellement, le circuit électronique de déphasage externe comportant un premier déphaseur externe ayant une valeur de phase égale à 180° destiné à alimenter deux guides d'onde en opposition de phase, les deux autres guides d'onde étant alimentés en phase, et un deuxième déphaseur externe ayant une valeur de phase égale à 90° destiné à établir une quadrature de phase entre les deux guides d'ondes alimentés en phase et les deux guides d'onde alimentés en opposition de phase.

Préférentiellement, l'antenne plane comporte deux réseaux de guides d'ondes à fentes rayonnantes, de structure identique, dédiés respectivement à l'émission et à la réception.

Avantageusement, l'antenne plane comporte en outre une pluralité de dipôles rayonnants en bande L, les dipôles rayonnants étant implantés sur l'une des plaques métalliques des réseaux de guides d'onde à fentes rayonnantes montés sur la plateforme tournante.

L'invention concerne aussi un véhicule comportant au moins une telle antenne plane et un système de télécommunication par satellite comportant au moins un tel véhicule.

D'autres particularités et avantages de l'invention apparaîtront clairement dans la suite de la description donnée à titre d'exemple purement illustratif et non limitatif, en référence aux dessins schématiques annexés qui représentent :
- figures 1a et 1b : deux schémas partiels, respectivement en perspective et en coupe, d'un exemple de structure interne d'une antenne plane, selon l'invention ;
- figure 2: un schéma synoptique et d'implantation d'un exemple de structure d'une antenne plane à polarisation circulaire, comportant des fonctions d'émission et de réception séparées, selon l'invention ;
- figure 3: un schéma d'implantation d'un exemple d'antennes planes bi-bandes, comportant des fonctions d'émission et de réception séparées et fonctionnant alternativement en bande Ka ou Ku, selon l'invention ;
- figure 4 : un schéma d'implantation d'un exemple d'antennes planes tri-bandes, comportant des fonctions d'émission et de réception séparées et fonctionnant simultanément en bande L et en bande Ka ou Ku, selon l'invention.

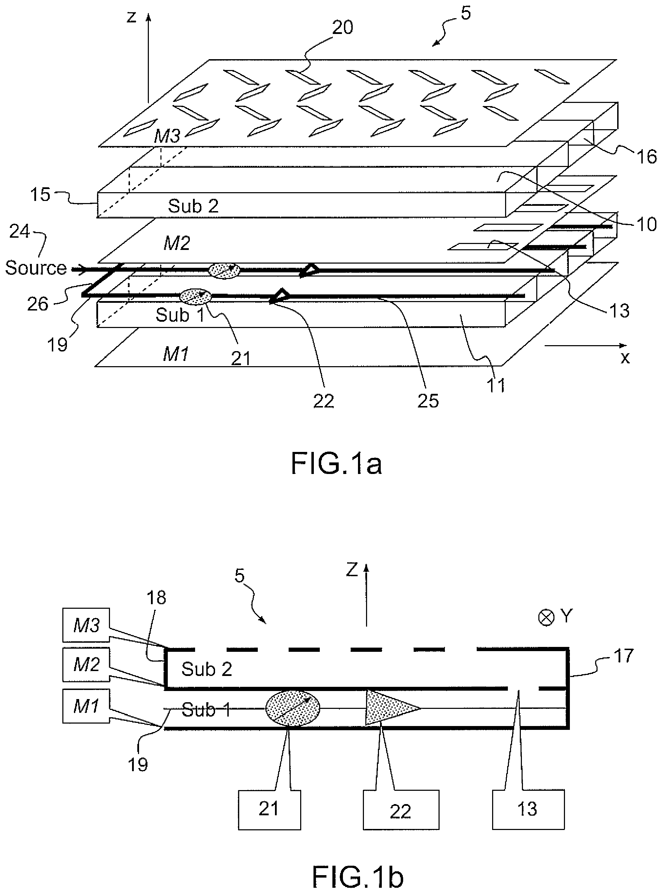

L'antenne plane représentée partiellement sur les figures 1a et 1b est de structure tri-plaques. Elle comporte un réseau 5 de guides d'onde à fentes rayonnantes comportant une succession alternées de trois plaques métalliques M1, M2, M3 respectivement inférieure, intermédiaire et supérieure, superposées parallèlement les unes sur les autres, et de deux substrats de diélectrique Sub1, Sub2, respectivement inférieur et supérieur, intercalés entre deux plaques métalliques consécutives. Les plans des différentes couches de l'antenne sont parallèles à un plan XY. La hauteur de l'antenne est selon un axe Z orthogonal au plan XY. Le substrat de diélectrique supérieur Sub2 supporte les guides d'onde à fentes rayonnantes 10, le substrat inférieur Sub1 supporte des guides d'ondes 11 destinés à alimenter individuellement chaque guide d'ondes à fentes rayonnantes 10 par un signal hyperfréquence. L'antenne devant fonctionner en bande Ka, pour répondre aux normes imposées dans ce domaine de fonctionnement, il est nécessaire qu'elle émette des ondes dans une polarisation circulaire. Pour cela, selon l'invention, le réseau 5 comporte au moins quatre guides d'onde à fentes rayonnantes aménagés dans le substrat supérieur et quatre guides d'onde d'alimentation correspondants aménagés dans le substrat inférieur. Les guides d'onde à fente rayonnantes 10 du substrat supérieur et les guides d'onde 11 du substrat inférieur sont en nombre identique, se correspondent deux à deux et communiquent entre eux deux à deux par l'intermédiaire de fentes de couplage 13 traversant la plaque métallique intermédiaire M2. Ainsi, sur la figure 1a, chaque guide d'onde 11 du substrat inférieur Sub1 comporte deux parois métalliques, inférieure et supérieure, respectivement formées par les plaques métalliques inférieure M1 et intermédiaire M2 et des parois métalliques latérales reliant les deux plaques métalliques inférieure M1 et intermédiaire M2. Chaque guide d'onde 11 du substrat inférieur Sub1 comporte en outre une fente de couplage 13 traversant la plaque métallique intermédiaire M2 et débouchant dans un guide d'onde 10 du substrat supérieur Sub2. Chaque guide d'onde 10 du substrat supérieur Sub2 comporte deux parois métalliques, inférieure et supérieure, respectivement formées par les plaques métalliques intermédiaire M2 et supérieure M3 et des parois métalliques latérales reliant les deux plaques métalliques intermédiaire M2 et supérieure M3. Les guides d'onde 10, 11 s'étendent selon un axe longitudinal parallèle à une même direction, pouvant correspondre, par exemple, à l'axe X et comportent deux extrémités opposées 15, 16 sur cet axe. Comme représenté sur la figure 1b, les guides d'onde du substrat supérieur Sub2 sont fermés à leurs deux extrémités 15, 16 par une première et une deuxième parois métalliques 17, 18 transversales reliant les trois plaques métalliques M1, M2, M3 entre elles alors que les guides d'onde du substrat inférieur ne sont fermés qu'à une seule extrémité 16 par la première paroi transversale 17, leur extrémité ouverte 15 correspondant à une entrée de signal 19. Chaque guide d'onde 10 du substrat supérieur Sub2 comporte en outre une pluralité de fentes rayonnantes 20 traversant la plaque métallique supérieure M3. Toutes les fentes rayonnantes 20 aménagées dans un même guide d'onde sont parallèles entre elles et orientées dans une même direction, par exemple à 45° par rapport aux directions X et Y et émettent un plan d'onde polarisé parallèlement à leur orientation. Les fentes rayonnantes 20 de deux guides d'ondes 10 adjacents sont disposées en chevrons, chaque chevron formant un angle non nul, par exemple égal à 90°. Sur la figure 1a, toutes les fentes sont orientées à 45° par rapport aux directions X et Y mais les fentes rayonnantes 20 de deux guides d'onde adjacents sont disposées en chevrons et forment un angle de 90° entre elles.

Chaque guide d'onde 11 du substrat inférieur Sub1 comporte un circuit interne d'alimentation individuel 25 apte à recevoir un signal hyperfréquence entrant 19 appliqué à son extrémité ouverte, ce circuit interne d'alimentation individuel 25 comportant un circuit électronique individuel interne de déphasage et d'amplification comportant un déphaseur interne 21 pour contrôler la phase du signal à émettre et un dispositif d'amplification interne 22 du signal entrant permettant de maîtriser le rayonnement émis par l'antenne. Le signal entrant 19 peut être émis par exemple par une source externe 24, par exemple unique, puis divisé par un diviseur 26 relié en entrée de chacun des guides d'onde 11 du substrat inférieur Sub1. Après déphasage 21 et amplification 22, le signal entrant 19 dans l'un des guides d'onde 11 du substrat inférieur Sub1 est transmis dans un guide d'onde 10 correspondant du substrat supérieur Sub2 par l'intermédiaire des fentes de couplage 13 dans la plaque métallique intermédiaire M2 puis rayonné par les fentes rayonnantes 20. Un balayage et un dépointage du faisceau en élévation, dans un plan ZX perpendiculaire au plan XY de l'antenne, est obtenu par contrôle de la loi de phase et d'amplitude appliquée électroniquement par les circuits internes d'alimentation individuels de chaque guide d'onde 11 du substrat inférieur correspondant à chacun des guides d'onde 10 à fentes rayonnantes.

Chaque guide d'onde 11 du substrat inférieur Sub1 étant alimenté individuellement par un circuit interne 25 et comportant un circuit électronique individuel interne de déphasage 21 et d'amplification 22, le contrôle de phase est réalisé de manière continue ce qui permet de maîtriser continûment la direction de rayonnement de l'antenne en élévation. Par ailleurs, l'amplification est répartie dans chaque guide d'onde 11 ce qui permet une utilisation d'amplificateurs à faible puissance et de s'affranchir d'un circuit d'amplification externe complexe et volumineux. En outre, aucun moyen de commutation de source à haute énergie n'est nécessaire pour réaliser un balayage continu du faisceau.

Pour que l'onde émise soit en polarisation circulaire, le réseau 5 de guides d'onde à fentes rayonnantes comporte en outre un deuxième circuit électronique de déphasage externe placé en entrée du réseau 5, ce deuxième circuit de déphasage comportant un premier déphaseur externe 23 ayant une valeur de phase égale à 180° destiné à alimenter le deuxième guide d'onde à fentes rayonnantes en opposition de phase par rapport au premier guide d'onde à fentes rayonnantes et un deuxième déphaseur externe 27 ayant une valeur de phase égale à 90° destiné à établir une quadrature de phase entre les signaux alimentant les deux premiers guides d'ondes 11 et les signaux alimentant les troisième et quatrième guides d'onde 11.

Chaque guide d'onde à fentes rayonnantes ayant des fentes inclinées à 45° par rapport aux directions X et Y et formant un angle de 90° entre elles, les fentes de chaque guide d'onde 10 rayonnent un plan d'ondes comportant deux composantes de polarisation respectivement selon les directions X et Y. Les premier et deuxième guides d'onde étant alimentés en opposition de phase, les ondes qu'ils émettent se combinent vectoriellement entre elles et rayonnent globalement une onde résultante polarisée selon la direction X, les composantes de polarisation selon la direction Y s'annulant entre elles. Les troisième et quatrième guides d'onde étant alimentés en phase, les ondes qu'ils émettent se combinent vectoriellement entre elles et rayonnent globalement une onde résultante polarisée selon la direction Y, les composantes de polarisation selon la direction X s'annulant entre elles. Les deux ondes résultantes polarisées respectivement selon les directions X et Y et alimentées en quadrature de phase se combinent alors entre elles en une onde globale polarisée circulairement et émise par le réseau de guides d'onde à fentes rayonnantes 5.

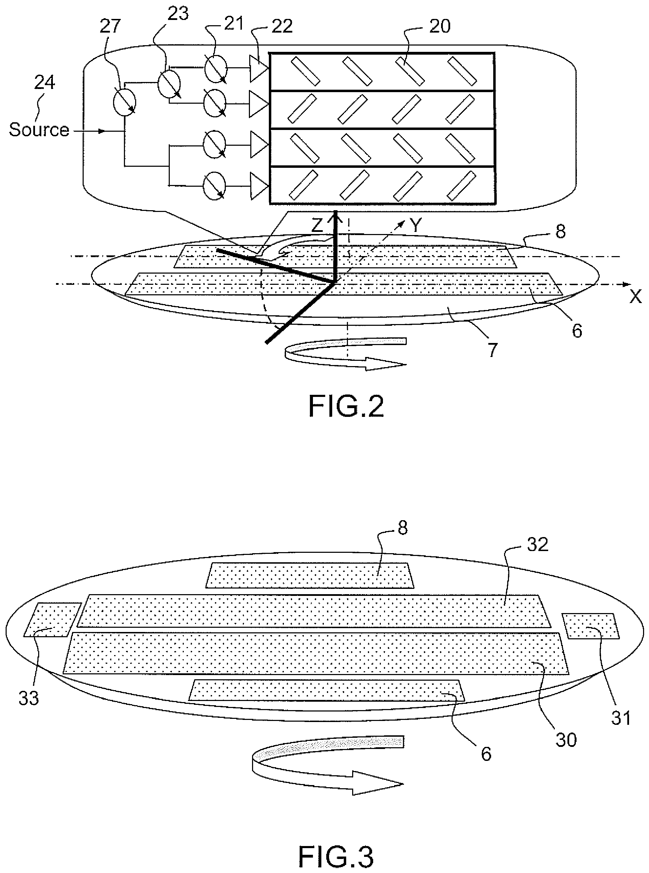

En plaçant l'antenne plane 6 ainsi obtenue sur une plateforme 7 tournante en azimut, le pointage du faisceau en azimut est réalisé par rotation de la plateforme et le pointage du faisceau en élévation est donné par la loi de phase appliquée sur les signaux entrants 19. Cette loi de phase est obtenue par la commande des déphaseurs internes 21 et des amplificateurs internes 22 intégrés dans chacun des guides d'onde 11 du substrat inférieur Sub1. Avantageusement, les guides d'onde 10 à fentes rayonnantes fonctionnant dans une faible bande passante, il est possible de scinder les fonctions d'émission et de réception et d'utiliser comme représenté sur la figure 2, un système d'antennes planes 6, 8 comportant un premier réseau de guides d'onde à fentes dédié à l'émission et un deuxième réseau de guides d'onde à fentes, non représenté, dédié à la réception, les deux réseaux de guides d'onde à fentes étant de structure identique et montés sur la même plateforme 7 tournante en azimut. Le pointage en élévation de chacune des antennes d'émission et de réception du système d'antennes planes monté sur la plateforme tournante est réalisé par une amplification et un contrôle électronique des phases de chacun des signaux circulant dans les guides à fentes formant les réseaux de rayonnement des deux antennes.

La hauteur de l'antenne sans la plateforme tournante sur laquelle elle est montée est de quelques millimètres. La hauteur totale de l'antenne avec la plateforme tournante 7 est quasiment égale à la hauteur de la plateforme tournante soit de l'ordre de 2 à 3cm.

L'antenne plane ainsi réalisée rayonne une onde polarisée circulairement qui répond aux conditions de hauteur imposées pour une implantation sur un moyen de transport et notamment sur un train à grande vitesse futur. En outre, le contrôle électronique des phases et des amplitudes des signaux alimentant cette antenne comporte un nombre d'éléments actifs limités typiquement inférieur à 50 éléments.

Pour certaines applications, en particulier dans le domaine aéronautique, la zone de couverture souhaitée est très étendue et l'avion est susceptible d'évoluer dans des zones où le satellite en bande Ka n'est plus en visibilité mais où un satellite en bande Ku est accessible. Dans ce cas, pour qu'il n'y ait pas de rupture du lien de connexion par satellite, il est avantageux de combiner les antennes d'émission 6 et de réception 8 à polarisation circulaire fonctionnant en bande Ka avec des antennes d'émission 30, 31 et de réception 32, 33 fonctionnant en polarisation linéaire en bande Ku comme représenté sur la figure 3, les antennes d'émission et de réception en bande Ku étant réalisées avec la même structure que celle décrite pour les antennes en bande Ka et étant montées sur la même plateforme tournante 7 en azimut. Dans ce cas, selon les normes actuellement en vigueur, les antennes en bande Ku doivent fonctionner en polarisation linéaire. La polarisation linéaire est obtenue en orientant toutes les fentes rayonnantes de tous les guides d'onde du substrat supérieur selon une même direction.

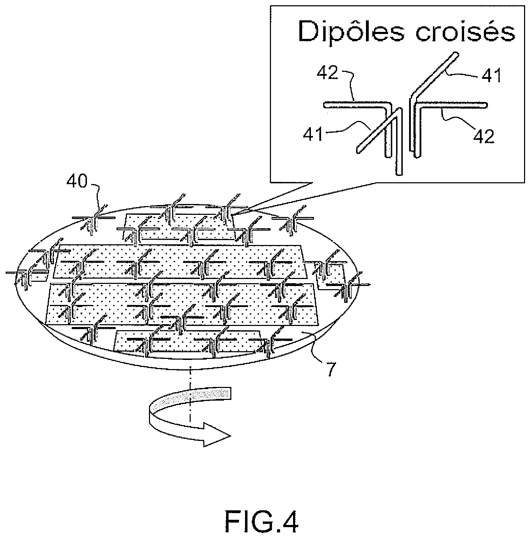

Sur la figure 4 est représenté un système d'antenne hybride embarqué très compact fonctionnant en bande Ka (et/ou Ku) et en bande L, permettant la poursuite simultanée de deux satellites. L'antenne en bande L est implantée sur la même plateforme tournante 7 en azimut que l'antenne Ka et/ou Ku. L'antenne en bande L comporte une pluralité de dipôles croisés 40 rayonnants orientés selon deux directions orthogonales, chaque dipôle rayonnant comportant deux appendices métalliques 41, 42 implantés sur l'une des plaques métalliques supérieure M3, intermédiaire M2 ou inférieure M1 de l'antenne fonctionnant en bande Ka et/ou de l'antenne fonctionnant en bande Ku. Ces appendices 41, 42 sont dimensionnés pour fonctionner en bande L et ne perturbent donc pas les antennes Ka ou Ku sur lesquelles ils sont implantés. Les dipôles croisés sont contrôlés individuellement en phase par un déphaseur non représenté, et rayonnent suivant une loi de phase qui leur est propre tout en suivant l'orientation en azimut de la plateforme 7 et imposée par le satellite pointé par l'antenne Ka et/ou Ku. La loi de phase des dipôles 41, 42 de l'antenne en bande L est commandée électroniquement de façon à pointer continûment un satellite fonctionnant en bande L. L'antenne ainsi réalisée est très compacte et permet la poursuite simultanée de deux satellites fonctionnant respectivement en bande Ka et en bande L ou en bande Ku et en bande L grâce à son fonctionnement en bi-bandes Ka et L ou en tri-bandes Ka, Ku et L suivant le type de réseaux de guides à fentes rayonnantes qui sont implantés sur la plateforme azimut et la polarisation linéaire et/ou circulaire générée par la loi de phase combinée à l'orientation des fentes rayonnantes de ces réseaux.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Antenne plane directive embarquée comportant au moins un réseau (5) de guides d'ondes à fentes rayonnantes, **caractérisée en ce que** :
- le réseau (5) de guides d'onde à fentes rayonnantes comporte une succession alternées de trois plaques métalliques superposées, respectivement inférieure (M1), intermédiaire (M2) et supérieure (M3) et de deux substrats de diélectrique, respectivement inférieur (Sub1) et supérieur (Sub2), intercalés entre deux plaques métalliques consécutives,
- les deux substrats inférieur (Sub1) et supérieur (Sub2), comportent chacun au moins quatre guides d'onde (10, 11) adjacents, les guides d'onde du substrat inférieur et du substrat supérieur étant en nombre identique, se correspondant deux à deux et communiquant entre eux deux à deux par l'intermédiaire de fentes de couplage (13) traversant la plaque métallique intermédiaire (M2),
- chaque guide d'onde (10) du substrat supérieur (Sub2) comporte en outre une pluralité de fentes rayonnantes (20) traversant la plaque métallique supérieure (M3), toutes les fentes rayonnantes (20) d'un même guide d'onde (10) étant parallèles entre elles et orientées dans une même direction, les fentes rayonnantes de deux guides d'ondes adjacents étant disposées en chevrons,
- chaque guide d'onde (11) du substrat inférieur (Sub1) comporte un circuit interne (25) d'alimentation individuel comportant un circuit électronique individuel interne de déphasage (21) et d'amplification (22)
- ladite antenne plane comprend un circuit électronique de déphasage externe destiné à établir une polarisation circulaire d'une onde émise par le réseau de guides à fentes rayonnantes.

2. Antenne plane selon la revendication 1, **caractérisée en ce que** chaque chevron forme un angle égal à 90°.

3. Antenne plane selon l'une des revendications 1 ou 2, **caractérisée en ce qu'**elle comprend en outre une plateforme (7) tournante en azimut et **en ce que** le réseau 5 de guides à fentes rayonnantes est monté sur la plateforme (7) tournante en azimut.

4. Antenne plane selon l'une des revendications 1 à 3, **caractérisée en ce que** le circuit électronique de déphasage externe comporte un premier déphaseur externe (23) ayant une valeur de phase égale à 180° destiné à alimenter deux guides d'onde (11) en opposition de phase, les deux autres guides d'onde (11) étant alimentés en phase, et un deuxième déphaseur externe (27) ayant une valeur de phase égale à 90° destiné à établir une quadrature de phase entre les deux guides d'ondes (11) alimentés en phase et les deux guides d'onde (11) alimentés en opposition de phase.

5. Antenne plane selon la revendication 4, **caractérisée en ce qu'**elle comporte deux réseaux de guides d'ondes à fentes rayonnantes, de structure identique, dédiés respectivement à l'émission et à la réception.

6. Antenne plane selon la revendication 5 en combinaison avec la revendication 3, **caractérisée en ce qu'**elle comporte en outre une pluralité de dipôles rayonnants (41, 42) en bande L, les dipôles rayonnants étant implantés sur l'une des plaques métalliques (M1, M2, M3) des réseaux de guides d'onde à fentes rayonnantes montés sur la plateforme tournante (7).

7. Antenne plane selon la revendication 5, **caractérisée en ce qu'**elle comporte en outre un réseau de guides d'onde à fentes rayonnantes dans lequel toutes les fentes rayonnantes de tous les guides d'onde sont orientées selon une même direction.

8. Véhicule comportant au moins une antenne selon l'une des revendications 1 à 7.

9. Système de télécommunication par satellite comportant au moins un véhicule selon la revendication 8.

## Patentansprüche

1. Bidirektionale Bord-Flachantenne, beinhaltend mindestens ein Netzwerk (5) von Hohlwellenleitern mit Strahlschlitzen, **dadurch gekennzeichnet, dass**:
- das Netzwerk (5) von Hohlwellenleitern mit Strahlschlitzen eine abwechselnder Abfolge von drei übereinander liegenden Metallplatten beinhaltet, jeweils einer unteren (M1), einer mittleren (M2) und einer oberen (M3), und von zwei Dielektrikums-Substraten, jeweils einem unteren (Sub1) und einem oberen (Sub2), welche zwischen zwei aufeinanderfolgenden Metallplatten eingelegt sind,
- die beiden Substrate, das untere (Sub1) und das obere (Sub2), jeweils mindestens vier benachbarte Hohlwellenleiter (10, 11) beinhalten, wobei die Hohlwellenleiter des unteren Substrates und des oberen Substrates in einer identischen Anzahl vorliegen, und einander paarweise entsprechen und miteinander paarweise in Vermittlung von Kopplungsschlitzen (13) kommunizieren,welche die mittlere Metallplatte (M2) durchqueren,
- jeder Hohlwellenleiter (10) des oberen Substrates (Sub2) zudem eine Vielzahl von Strahlschlitzen (20) beinhaltet, welche die obere Metallplatte (M3) durchquert, wobei alle Strahlschlitze (20) eines selben Hohlwellenleiters (10) parallel zueinander und in eine gleiche Richtung ausgerichtet sind, wobei die Strahlschlitze zweier benachbarter Hohlwellenleiter fischgerätmusterartig angeordnet sind,
- jeder Hohlwellenleiter (11) des unteren Substrates (Sub1) einen individuellen internen Versorgungsschaltkreis (25) beinhaltet, welcher einen individuellen internen elektronischen Phasenverschiebungs- (21) und Verstärkungsschaltkreis (22) beinhaltet,
- die Flacheantenne einen externen elektronischen Phasenverschiebungsschaltkreis beinhaltet, welcher dazu bestimmt ist, eine kreisförmige Polarisation einer durch das Netzwerk von Leitern mit Strahlschlitzen ausgesandten Welle herzustellen.

2. Flacheantenne nach Anspruch 1, **dadurch gekennzeichnet, dass** jedes der Fischgerätsmuster einen Winkel gleich 90° bildet.

3. Flachantenne nach einem der Ansprüche 1 oder 2, **dadurch gekennzeichnet, dass** sie zudem eine im Azimut drehende Plattform (7) beinhaltet und dass das Netzwerk (5) von Leitern mit Strahlschlitzen auf der im Azimut drehenden Plattform (7) montiert ist.

4. Flachantenne nach einem der Ansprüche 1 bis 3, **dadurch gekennzeichnet, dass** der externe elektronische Phasenverschiebungsschaltkreis einen ersten externen Phasenschieber (23) mit einem Phasenwert gleich 180° beinhaltet, welcher dazu bestimmt ist, zwei Hohlwellenleiter (11) gegenphasig zu versorgen, wobei die beiden anderen Hohlwellenleiter (11) gleichphasig versorgt werden, und ein zweiter externer Phasenschieber (27) mit einem Phasenwert gleich 90° dazu bestimmt ist, eine Phasenquadratur zwischen den beiden Hohlwellenleitern (11), welche gleichphasig versorgt werden und den beiden Hohlwellenleitern (11), welche gegenphasig versorgt werden, herzustellen.

5. Flachantenne nach Anspruch 4, **dadurch gekennzeichnet, dass** sie zwei Netzwerke von Hohlwellenleitern mit Strahlschlitzen identischer Struktur beinhaltet, welche jeweils für Sendung und Empfang ausgelegt sind.

6. Flachantenne nach Anspruch 5 in Kombination mit Anspruch 3, **dadurch gekennzeichnet, dass** sie zudem eine Vielzahl von strahlenden Dipolen (41, 42) im Band L beinhaltet, wobei die strahlenden Dipole auf einer der Metallplatten (M1, M2, M3) der Netzwerke von Hohlwellenleitern mit Strahlschlitzen installiert sind, welche an der drehbaren Plattform (7) montiert sind.

7. Flachantenne nach Anspruch 5, **dadurch gekennzeichnet, dass** sie zudem ein Netzwerk von Hohlwellenleitern mit Strahlschlitzen beinhaltet, in welchem alle Strahlschlitze aller Hohlwellenleiter in eine gleiche Richtung ausgerichtet sind.

8. Fahrzeug, welches mindestens eine Antenne nach einem der Ansprüche 1 bis 7 beinhaltet.

9. Satelliten-Telekommunikationssystem, beinhaltend mindestens ein Fahrzeug nach Anspruch 8.

## Claims

1. Onboard directional planar antenna comprising at least one array (5) of radiating slot waveguides, **characterized in that**:
- the array (5) of radiating slot waveguides comprises an alternating succession of three superposed metallic plates, respectively lower (M1), intermediate (M2) and upper (M3) and two dielectric substrates, respectively lower (Sub1) and upper (Sub2), inserted between two consecutive metallic plates,
- the two lower (Sub1) and upper (Sub2) substrates have each at least four adjacent waveguides (10, 11), the waveguides of the lower substrate and the upper substrate being identical in number corresponding pairwise and communicating with one other pairwise by way of coupling slots (13) passing through the intermediate metallic plate (M2),
- each waveguide (10) of the upper substrate (Sub2) further comprises a plurality of radiating slots (20) passing through the upper metallic plate (M3), all the radiating slots (20) of one and the same waveguide (10) are parallel to one other and oriented in one and the same direction, the radiating slots of two adjacent waveguides being arranged in chevrons,
each waveguide (11) of the lower substrate (Sub1) has an individual internal feed circuit (25) comprising an internal individual electronic circuit for phase shifting (21) and amplification (22), and
- said planar antenna comprises an electronic circuit for phase shifting circuit intended to establish a circular polarization of a wave emitted by the array of radiating slot guides.

2. The plane antenna according to claim 1, **characterized in that** each chevron forms an angle equal to 90 °.

3. The plane antenna according to one of claims 1 or 2, **characterized in that** it further comprises an azimuthally rotating platform (7) and **in that** the array (5) of radiating slot guides is mounted on the azimuthally rotating platform (7).

4. The plane antenna according to one of claims 1 to 3, **characterized in that** the electronic circuit for external phase shifting comprises a first external phase shifter (23) having a phase value equal to 180 ° intended to feed two waveguides (11) in phase opposition, the other two waveguides (11) being fed in phase, and a second external phase shifter (27) having a phase value equal to 90 ° intended to establish a phase quadrature between the two waveguides (11) fed in phase and the two waveguides (11) fed in phase opposition.

5. The plane antenna according to claim 4, **characterized in that** it comprises two arrays of radiating slot waveguides , of identical structure, dedicated respectively to transmission and reception.

6. The plane antenna according to claim 5 in combination with claim 3, **characterized in that** it further comprises a plurality of L-band radiating dipoles (41, 42), the radiating dipoles being installed on one of the metallic plates (M1, M2, M3) of the arrays of with radiating slot waveguides mounted on the rotating platform (7).

7. The plane antenna according to claim 5, **characterized in that** it further comprises an array of radiating slots waveguides in which all the radiating slots of all the waveguides are oriented in one and the same direction.

8. Vehicle comprising at least one antenna according to one of claims 1 to 7.

9. Satellite telecomunication device comprising at least one vehicle according to claim 8.
